**Europäisches Patentamt**

**European Patent Office**

**Office européen des brevets**

(19)

(11) Numéro de publication: **0 248 780**
**B1**

(12)

# FASCICULE DE BREVET EUROPEEN

(45) Date de publication du fascicule du brevet:
**28.02.90**

(51) Int. Cl.⁴: **B60S 1/24, F16C 7/04**

(21) Numéro de dépôt: **87870066.5**

(22) Date de dépôt: **11.05.87**

(54) Système d'essuie-glace pour véhicules à moteur.

(30) Priorité: **03.06.86 FR 8607962**

(43) Date de publication de la demande:
**09.12.87 Bulletin 87/50**

(45) Mention de la délivrance du brevet:
**28.02.90 Bulletin 90/9**

(84) Etats contractants désignés:
**DE ES GB IT**

(56) Documents cités:
**BE-A- 901 051**
**BE-A- 901 052**
**DE-C- 3 531 858**
**FR-A- 1 508 265**
**FR-A- 1 563 989**
**GB-A- 1 075 222**
**US-A- 2 758 481**

(73) Titulaire: **CHAMPION SPARK PLUG EUROPE S.A.,
Avenue Leopold III 2a, B-7120 Binche(BE)**
Titulaire: **Leroy, André, 64 Chaussée de Binche,
B-7030 Mons (Saint Symphorien)(BE)**
Titulaire: **Flamme, Jean Marie, 22 rue de la Délivrance,
B-7980 Beloeil(BE)**

(72) Inventeur: **Beneteau, Christian, Rue du 131e Régiment
d'Infanterie, 61, F-54730 Gorcy(FR)**
Inventeur: **Leroy, André, Chaussée de Binche, 64,
B-7030 Mons(BE)**
Inventeur: **Flamme, Jean Marie, Rue de la Délivrance, 22,
B-7980 Beloeil(BE)**

(74) Mandataire: **Fobe, Edouard et al, Bureau VANDER
HAEGHEN 63, Avenue de la Tolson d'Or,
B-1060 Bruxelles(BE)**

ACTORUM AG

## Description

L'invention concerne un système d'essuieglace destiné aux véhicules à moteur, comportant au moins un bras porte-balai guidé et animé en mouvement complexe par une première chaîne cinématique à un degré de liberté comportant un élément fixe éventuellement matérialisé par la carrosserie elle-même, un balancier en liaison rotoîde par rapport à l'élément fixe et animé en rotation alternative au départ d'un motoréducteur par une deuxième chaîne cinématique, une bielle en liaison rotoîde, avec le balancier et solidaire du bras portebalai, ainsi qu'une barre articulée sur la bielle en un point distinct de la liaison rotoîde précitée.

On connaît un tel système d'essuie-glace guidant et animant en mouvement complexe un bras portebalai en le liant à une bielle d'une chaîne cinématique comportant ecxclusivement des articulations rotoîdes et prismatiques ou rotoîde et sphérique (brevet français n° FR-A 2 563 788 et brevets belges n° BE-A 901 052 et BE-A 903 681 notamment). Ces systèmes présentent deux inconvénients: protection difficile des liaisons prismatique et sphérique contre l'eau sale et implantation coûteuse de la chaîne sur la carrosserie.

La présente invention élimine ces inconvénients et présente en outre l'avantage d'assurer un amortissement des chocs qui peuvent résulter des inversions de sens des efforts qui se produisent dans la chaîne cinématique animant le bras porte-balai selon l'invention.

Le système object de l'invention qui est du type décrit dans le premier paragraphe du présent mémoire est caractérisé en ce que la première chaîne cinématique comporte en outre une deuxième barre assemblée d'une part à l'élément fixe et d'autre part en liaison torique avec la première barre de manière à ce que la première barre puisse prendre une orientation quelconque par rapport à la seconde, cette liaison torique étant matérialisée par un joint.

Dans cette première chaîne cinématique, l'articulation peut résulter de la combinaison d'une liaison rotoïde et d'une liaison torique matérialisées séparément, de manière que la liberté donnée par la liaison rotoïde soit obtenue par glissement et que les libertés données par la liaison torique soit obtenue par déformation. Cette articulation peut s'identifier à une simple liaison rotoïde dans le cas particulier où le mouvement de la première chaîne cinématique est plan, ce qui implique que les axes de toutes les liaisons rotoïdes de cette première chaîne cinématique soient théoriquement parallèles.

Dans la première chaîne cinématique du système objet de l'invention, le balancier est animé en rotation alternative au départ d'un motoréducteur par une deuxième chaîne cinématique et le bras portebalai est solidaire de la bielle, c'est-à-dire qu'il lui est assemblé ou que la bielle en fait partie.

Pour éviter toute ambiguïté dans la description de l'invention, nous précisons comme suit les notions de liaison rotoîde, de liaison torique et de joint. Nous appelons liaison rotoîde entre deux solides une liaison qui autorise une liberté de rotation relative autour d'un axe. Nous appelons liaison torique entre deux solides une liaison qui permet, par rapport à l'un des solides, une orientation quelconque d'un axe de l'autre, qu'elle astreint à passer par un point fixe appartenant aux deux solides. Nous appelons joint un élément ou un organe (association d'éléments) matérialisant une liaison torique entre duex solides auxquels il s'assemble. Quand il s'agit d'un élément, cet élément est déformable, au premier ordre, en flexion seulement.

Pratiquement, la réalisation d'un joint au moyen d'un seul élément implique que cet élément soit constitué de matériau élastomère. Sa forme au repos peut alors être celle d'une pièce de révolution présentant une gorge à surface torique; elle peut encore être celle d'une pièce prismatique ou d'une pièce coudée présentant localement une section rétrécie. La combinaison du matériau et de l'une de ces formes permet la localisation et l'amplification de la déformation en flexion du joint, tout en limitant sa déformation en traction-compression et en torsion. Elle assure aussi l'amortissement des chocs qui peuvent se produire à l'inversion de sens du mouvement du balancier moteur. Cet amortissement peut ègalement être complété par un dispositif complémentaire de type quelconque généralement connu, intégré à la première barre, notamment entre les deux liaisons que cette barre a avec la bielle d'une part et avec la deuxième barre d'autre part. Le recours à une forme coudée se justifie pour éviter toute contrainte permanente dans le joint lorsque les barres auxquelles il est assemblé ne sont pas alignées en position de repos.

L'objet de l'invention est représenté à titre d'exemple non limitatif sur les figures des planches 1/4 à 4/4.

Les figures 1 et 2 des planches 1/4 et 2/4 représentent deux vues simplifiées, à échelle réduite, d'un système conforme à l'invention.

La figure 3 de la planche 3/4 montre, à l'échelle 1/1, la réalisation de l'articulation entre la première barre et la bielle du système représenté aux figures 1 et 2.

La figure 4 de la planche 3/4 montre, à l'échelle 2/1, une autre réalisation de l'articulation entre la première barre et la bielle d'un système conforme à l'invention.

La figure 5 de la planche 4/4 montre à l'échelle 2/1, la réalisation de la liaison torique entre les première et deuxième barre du système représenté par les figures 1 et 2.

Les figures 6 à 9 de la planche 4/4 montrent, à échelle agrandie, d'autres réalisations de la liaison torique entre les première et seconde barres de systèmes conformes à l'invention.

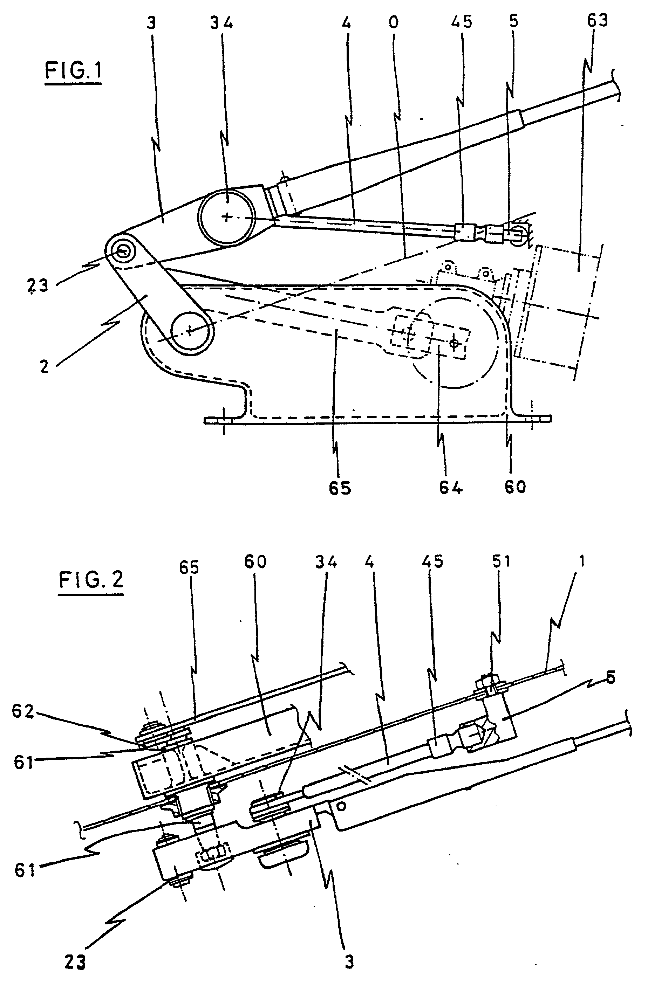

Sur les figures 1 et 2, on reconnaît la première chaîne cinématique à un degré de liberté, constituée de l'élément fixe matérialisé par l'auvent de la carrosserie - cet auvent est représenté en 1 sur la figure 2 et est schématisé par la ligne 0 en trait mixte sur la figure 1 -, du balancier 2 calé sur l'arbre 61 qui est en liaison rotoïde avec l'auvent 1, du bras porte-balai 3 qui matérialise la bielle de la chaîne cinématique et qui est en liaison rotoïde avec le balancier 2, de la première barre 4 qui est articulée en 34 sur la bielle 3 ainsi que de la deuxième barre 5 qui est assemblée en 51 sur l'auvent et qui est en outre en liaison torique avec la première barre 4 par l'intermédiaire du joint en élastomère 45.

On distingue également sur ces figures le bâti 60 disposé sous l'auvent ainsi que le balancier 62 calé sur l'arbre 61, ce balancier appartenant à la deuxième chaîne cinématique qui crée un mouvement alternatif au départ du motoréducteur 63, par l'intermédiaire de la manivelle 64 et de la bielle 65.

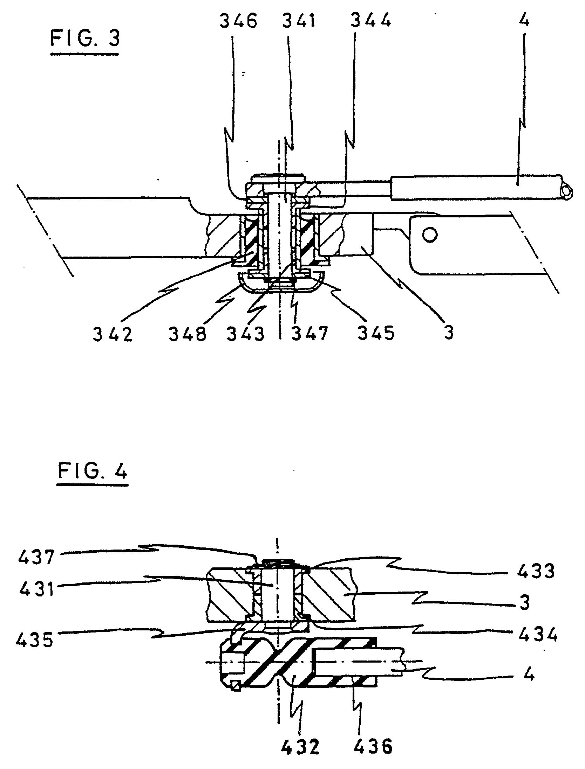

Sur la figure 3, on distingue les divers éléments constitutifs de l'articulation 34 entre le bras porte-balai 3 et la première barre 4 du système représenté aux figures 1 et 2. Sur la barre 4 est assemblé l'arbre 341, sur le bras porte-balai 3 est assemblé l'élément en élastomère 342. L'arbre 341 est guidé en rotation par rapport à l'élément 342 par l'intermédiaire des buselures 343 et 344, il est immobilisé en translation par rapport au même élément 342 par l'intermédiaire des rondelles d'appui 345 et 346 ainsi que du segment d'arrêt 347. Une protection 348 coiffe l'arbre 341 et la rondelle d'appui 345. On observera que l'élément en élastomère 342 peut se déformer dans l'espace grâce à sa forme particulière, il peut ainsi assurer une liaison torique de débattements limités entre l'axe de l'arbre 341 et le bras 3.

La figure 4 représente une autre réalisation de l'articulation entre le bras 3 et la barre 4. Cette articulation est constituée de l'élément de révolution en élastomère 432 assemblé sur l'extrémité 436 de la barre 4. Cet élément 432 porte une pièce coudée 435 sur lequel est assemblé l'arbre 431 guidé en liaison rotoïde par rapport au bras 3 par l'intermédiaire des buselures 433 et 434 ainsi que du segment d'arrêt 437.

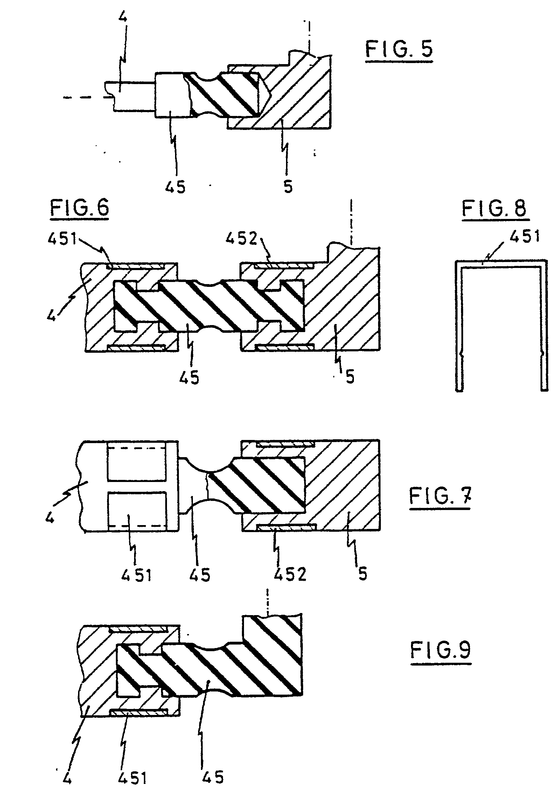

La figure 5 montre, en position de repos, le joint 45 liant la première barre 4 et la seconde barre 5 du système décrit par les figures 1 et 2. Ce joint 45 qui est une pièce de révolution dans sa position de repos, est assemblé par collage sur les extrémités des barres 4 et 5.

Les figures 6 et 7 représentent une autre réalisation du joint 45 dont la forme au repos est celle d'une pièce prismatique présentant une section rétrécie.

La figure 6 est une coupe par un plan contenant l'axe d'assemblage de la barre 5 sur l'auvent 1, la figure 7 est une vue avec coupe partielle selon un plan perpendiculaire à l'axe d'assemblage de la barre 5 sur l'auvent 1. On observera sur ces figures le mode d'assemblage du joint 45 avec les barres 4 et 5, faisant appel au pinçage par agraphes 451 et 452. Avant montage, ces agraphes ont la forme représentée à la figure 8.

La figure 9 montre une autre réalisation du joint 45 dont la forme au repos est celle d'une pièce coudée présentant une section rétrécie.

## Revendications

1. Système d'essuie-glace destiné aux véhicules à moteur, comportant au moins un bras porte-balai guidé et animé en mouvement complexe par une première chaîne cinématique à un degré de liberté comportant un élément fixe éventuellement matérialisé par la carrosserie elle-même (1), un balancier (2) en liaison rotoïde par rapport à l'élément fixe (1) et animé en rotation alternative au départ d'un motoréducteur (63) par une deuxième chaîne cinématique (60, 61, 62, 64 et 65), une bielle (3) en liaison rotoïde (23), avec le balancier (2) et solidaire du bras porte-balai, ainsi qu'une barre (4) articulée sur la bielle (3) en un point distinct de la liaison rotoïde précitée (23), caractérisé en ce que la première chaîne cinématique comporte en outre une deuxième barre (5) assemblée (51) d'une part à l'élément fixe (1) et d'autre part en liaison torique avec la première barre (4) de manière à ce que la première barre (4) puisse prendre une orientation quelconque par rapport à la seconde (5), cette liaison torique étant matérialisée par un joint (45).

2. Système d'essuie-glace selon la revendication 1, CARACTERISE en ce que l'articulation (34) entre la bielle (3) et la première barre (4) résulte de la combinaison d'une liaison rotoïde ett d'une liaison torique matérialisées séparément de manière que la liberté donnée par la liaison rotoïde soit obtenue par glissement (343, 344, 345, 346, 347 et 341) et que les libertés données par la liaison torique soient obtenues par déformation (342).

3. Système d'essuie-glace selon la revendication 1, CARACTERISE en ce que le mouvement de la première chaîne cinématique est plan et en ce que l'articulation (34) entre la bielle (3) et la première barre (4) est une simple liaison rotoïde.

4. Système d'essuie-glace selon la revendication 1, CARACTERISE en ce que le joint (45) est un élément en matériau élastomère.

5. Système d'essuie-glace selon la revendication 4, CARACTERISE en ce que la forme au repos du joint (45) est celle d'une pièce de révolution présentant une gorge à surface torique.

6. Système d'essuie-glace selon la revendication 4, CARACTERISE en ce que la forme au repos du joint (45) est celle d'une pièce prismatique présentant localement une section rétrécie.

7. Système d'essuie-glace selon la revendication 4, CARACTERISE en ce que la forme au repos du joint (45) est celle d'une pièce coudée présentant localement une section rétrécie.

## Claims

1. Windscreen-wiper system intended for motor vehicles, comprising at least one wiper-blade arm which is guided and driven in complex movement by a first kinematic chain having a degree of freedom and comprising a stationary component, optionally realized by the body itself (1), a rocking arm (2) rotationally coupled relative to the stationary component (1) and driven in rocking motion from a geared motor (63) by means of a second kinematic chain (60, 61, 62, 64 and 65), a connecting bar (3) rotationally coupled (23) with the rocking arm (2) and integral with the wiper-blade arm, as well as a rod (4) articulated on the connecting bar (3) at a point distinct from the abovementioned rotational coupling (23), characterized in that the first kinematic chain comprises in addition a second rod (5) assembled (51) on the one hand on the stationary component (1) and on the other hand annularly coupled to the first rod (4) so that the first rod (4) may assume any orientation relative to the second (5), this annular coupling being realized by a joint (45).

2. Windscreen-wiper system according to Claim 1, characterized in that the articulation (34) between the connecting bar (3) and the first rod (4) results from the combination of a rotational coupling and an annular coupling, which are realized separately so that the degree of freedom given by the rotational coupling is obtained by sliding (343, 344, 345, 346, 347 and 341) and that the degrees of freedom given by the annular coupling are obtained by deformation (342).

3. Windscreen-wiper system according to Claim 1, characterized in that the movement of the first kinematic chain is two-dimensional and in that the articulation (34) between the connecting bar (3) and the first rod (4) is a simple rotational coupling.

4. Windscreen-wiper system according to Claim 1, characterized in that the joint (45) is a component made of elastomeric material.

5. Windscreen-wiper system according to Claim 4, characterized in that the shape at rest of the joint (45) is that of a body of revolution having a throat with an annular surface.

6. Windscreen-wiper system according to Claim 4, characterized in that the shape at rest of the joint (45) is that of a prismatic body having in part a narrowed section.

7. Windscreen-wiper system according to Claim 4, characterized in that the shape at rest of the joint (45) is that of a right-angled body having in part a narrowed section.

## Claims

1. Windscreen-wiper system intended for motor vehicles, comprising at least one wiper-blade arm which is guided and driven in complex movement by a first kinematic chain having a degree of freedom and comprising a stationary component, optionally realized by the body itself (1), a rocking arm (2) rotationally coupled relative to the stationary component (1) and driven in rocking motion from a geared motor (63) by means of a second kinematic chain (60, 61, 62, 64 and 65), a connecting bar (3) rotationally coupled (23) with the rocking arm (2) and integral with the wiper-blade arm, as well as a rod (4) articulated on the connecting bar (3) at a point distinct from the abovementioned rotational coupling (23), characterized in that the first kinematic chain comprises in addition a second rod (5) assembled (51) on the one hand on the stationary component (1) and on the other hand annularly coupled to the first rod (4) so that the first rod (4) may assume any orientation relative to the second (5), this annular coupling being realized by a joint (45).

2. Windscreen-wiper system according to Claim 1, characterized in that the articulation (34) between the connecting bar (3) and the first rod (4) results from the combination of a rotational coupling and an annular coupling, which are realized separately so that the degree of freedom given by the rotational coupling is obtained by sliding (343, 344, 345, 346, 347 and 341) and that the degrees of freedom given by the annular coupling are obtained by deformation (342).

3. Windscreen-wiper system according to Claim 1, characterized in that the movement of the first kinematic chain is two-dimensional and in that the articulation (34) between the connecting bar (3) and the first rod (4) is a simple rotational coupling.

4. Windscreen-wiper system according to Claim 1, characterized in that the joint (45) is a component made of elastomeric material.

5. Windscreen-wiper system according to Claim 4, characterized in that the shape at rest of the joint (45) is that of a body of revolution having a throat with an annular surface.

6. Windscreen-wiper system according to Claim 4, characterized in that the shape at rest of the joint (45) is that of a prismatic body having in part a narrowed section.

7. Windscreen-wiper system according to Claim 4, characterized in that the shape at rest of the joint (45) is that of a right-angled body having in part a narrowed section.

## Patentansprüche

1. Scheibenwischersystem für Kraftfahrzeuge, das wenigstens einen Wischerhaltearm aufweist, der über eine erste kinematische Kette mit einem Freiheitsgrad geführt und zur Ausführung einer zusammengesetzten Bewegung angetrieben ist, wobei die erste kinematische Kette ein festes Element, das gegebenenfalls von der Karosserie (1) selbst gebildet wird, einen Schwinghebel (2) als Drehverbindung bezüglich des festen Elements (1), der alternierend mit Hilfe eines Antriebsreduktionsgetriebes (63) über eine zweite kinematische Kette (60, 61, 62, 64 und 65) angetrieben ist, ein Glied (3), das in Drehverbindung (23) mit dem Schwinghebel (2) und fest mit dem Wischerhalterarm verbunden ist, sowie eine Stange (4) aufweist, die über das Glied (3) an einer von der vorstehend genannten Drehverbindung (23) entfernt liegenden Stelle angelenkt ist, dadurch gekennzeichnet, daß die erste kinematische Kette ferner eine zweite Stange (5) aufweist, die einerseits bei (51) an dem festen Element (1) und andererseits mit der torischen Verbindung mittels der ersten Stange (4) derart verbunden ist, daß die erste Stange (4) irgendeine Ausrichtung bezüglich der zweiten Stange (5) einnehmen kann, wobei die Drehverbindung von einer Gelenkverbindung (45) gebildet wird.

2. Scheibenwischersystem nach Anspruch 1, dadurch gekennzeichnet, daß die Gelenkverbindung (34) zwischen dem Glied (3) und der ersten Stange (4) einer Kombination der Drehverbindung und einer torischen Verbindung gebildet wird, die gesondert derart ausgelegt ist, daß der durch die Drehverbindung erhaltene Freiheitsgrad durch Gleiten (343, 344, 345, 346, 347 und 341) erzielt wird und daß die durch die torische Verbindung erhaltenen Freiheitsgrade durch Deformation (342) erzielt werden.

3. Scheibenwischersystem nach Anspruch 1, dadurch gekennzeichnet, daß die Bewegung der ersten kinematischen Kette in einer Ebene erfolgt und daß die Gelenkverbindung (34) zwischen dem Glied (3) und der ersten Stange (4) eine einfache Drehverbindung ist.

4. Scheibenwischersystem nach Anspruch 1, dadurch gekennzeichnet, daß die Gelenkverbindung (45) von einem Element aus elastomerem Material gebildet wird.

5. Scheibenwischersystem nach Anspruch 4, dadurch gekennzeichnet, daß die Ausgangsgestalt der Gelenkverbindung (45) die Form eines Rotationsteils annimmt, das eine Hohlkehle mit einer Torusfläche aufweist.

6. Scheibenwischersystem nach Anspruch 4, dadurch gekennzeichnet, daß die Ausgangsgestalt der Gelenkverbindung (45) die Form eines prismatischen Teils annimmt, das örtlich eine Querschnittsverengung hat.

7. Scheibenwischersystem nach Anspruch 4, dadurch gekennzeichnet, daß die Ausgansgestalt der Gelenkverbindung (45) die eines gekrümmten Teils einnimmt, das örtlich eine Querschnittsverengung hat.

EP 0 248 780 B1

FIG. 1

FIG. 2

FIG. 3

346   341   344          4

342   348   343  347   345   3

FIG. 4

437

431

435

433

3

434

4

432   436

FIG. 5

FIG.6

FIG. 8

FIG. 7

FIG.9